# EUROPÄISCHE PATENTSCHRIFT

(11) **EP 2 125 412 B1**
(45) Veröffentlichungstag und Bekanntmachung des Hinweises auf die Patenterteilung: **03.08.2011**
(21) Anmeldenummer: 08715705.3
(22) Anmeldetag: 07.02.2008
(51) Int. Cl.: B60J 10/00, B62D 65/06, B23P 19/04

(54) **VERFAHREN UND VORRICHTUNG ZUM ANBRINGEN VON DICHTUNGSPROFILEN**
METHOD AND DEVICE FOR ATTACHING SEALING PROFILES
PROCEDE ET DISPOSITIF POUR INSTALLER DES PROFILES D'ETANCHEITE

(30) Priorität: 01.03.2007 DE 102007010421
(43) Veröffentlichungstag der Anmeldung: 02.12.2009
(73) Patentinhaber: Grohmann Engineering GmbH, 54595 Prüm (DE)
(72) Erfinder: GROHMANN, Klaus, 54597 Hersdorf (DE); THOMMES, Lothar, 54634 Bitburg (DE); WEINANDY, Martin, 54597 Fleringen (DE)
(74) Vertreter: Kohlmann, Kai
(86) Internationale Anmeldenummer: PCT/EP2008/000943
(87) Internationale Veröffentlichungsnummer: WO 2008/104269

(56) Entgegenhaltungen:
- WO-A-2004/108459
- DE-A1- 10 138 781
- DE-C1- 19 704 327
- US-A- 4 620 354

## Beschreibung

Die Erfindung betrifft ein Verfahren zum Anbringen von Dichtungsprofilen an Fahrzeugkarosserien oder deren Teilen, wobei das Dichtungsprofil aus einem Speicher abgezogen und mit einer an dem Dichtungsprofil angeordneten Klebeschicht entlang einer für die Anbringung vorgesehenen Linie an der Fahrzeugkarosserie oder dem Teil der Fahrzeugkarosserie mittels einer Andruckrolle aufgerollt wird.

Aus der DE 101 38 781 A1 ist ein Verfahren zur Anbringung einer Dichtung an einer Fahrzeugtür bekannt, bei dem die auf einer Vorratsrolle als Endlosprofil vorliegende Dichtung von einer Vorratsrolle abgezogen und mit einer an der Dichtung vorhandenen Klebefläche entlang einer für die Anbringung vorgesehenen Linie an der Fahrzeugtür umlaufend aufgerollt wird.

Unter dem Begriff "aufgerollt" wird im Zusammenhang mit diesem Stand der Technik und der vorliegenden Erfindung verstanden, dass das Dichtungsprofil beispielsweise mit Hilfe von Andruckrollen einer geeigneten Vorrichtung fortlaufend an einer Fläche einer Fahrzeugkarosserie oder einem Teil der Fahrzeugkarosserie, wie beispielsweise einer Fahrzeugtür, der vorgegebenen Montagelinie folgend angedrückt und auf diese Art und Weise angebracht wird.

Das Dichtungsprofil liegt bei dem Verfahren nach der DE 101 38 781 A1 als Extrusionsprofil mit aufgebrachtem Klebeband auf der Vorratsrolle vor und wird von dieser abgezogen. Dabei ist die Klebefläche des Dichtungsprofils zunächst mit einem Liner abgedeckt, der vor der Anbringung der Dichtung abgezogen wird. Dieses Abziehen des Liners von der Klebefläche kann beispielsweise mit Hilfe eins Roboters erfolgen, der auch die Andruckrolle trägt.

Das auf der Vorratsrolle aufgewickelte Dichtungsprofil muss beim Hersteller vorkonfektioniert werden. Es besteht regelmäβig aus dem Dichtungsprofil und dem daran angebrachten Klebestreifen, der an seiner nach Außen weisenden Klebeschicht mit dem Liner abgedeckt ist. Bei der Herstellung des vorkonfektionierten Dichtungsprofils sind daher neben der Extrusion des Dichtungsprofils weitere Arbeitsschritte erforderlich, nämlich das Aufkleben des Klebestreifens auf das Dichtungsprofil sowie das Anbringen des Liners.

Das Anbringen des Klebestreifens muss genau auf die Extrusion abgestimmt werden, die hierdurch gestört werden kann. Darüber hinaus ist es erforderlich, das vorkonfektionierte Dichtungsprofil sorgfältig auf dem Weg vom Hersteller des Dichtungsprofils zum Anwender, beispielsweise dem Automobilhersteller, zu verpacken. Andernfalls besteht die Gefahr, dass sich der Liner vorzeitig von der Klebeschicht ablöst und das Dichtungsprofil nicht ordnungsgemäß mit der Fahrzeugkarosserie oder einem Teil der Fahrzeugkarosserie verklebt werden kann. Aber selbst bei ordnungsgemäßer Verpackung besteht die Gefahr, dass sich der Liner auf dem Transportweg durch Vibrationen, Eigenspannungen des Dichtungsprofils oder klimatische Einflüsse löst. Darüber hinaus kann durch das Verkleben des Klebestreifens bei der Extrusion die Qualität der unterschiedlichen Chargen der Dichtungsprofile variieren.

Schließlich ist aus der DE 197 04 327 C1 eine Vorrichtung zur Anordnung eines Dichtstreifens an eine Flansch einer Schiebedachöffnung oder anderen Karosserieöffnung bekannt, wobei eine Vorratsrolle von der Applikations-Vorrichtung baulich getrennt in einem Speicher ortsfest angeordnet ist und der von der Vorratsrolle ablaufende Dichtstreifen mittels zumindest einer Umschlingung zweier beabstandet angeordneter Rollen entsprechend der für eine Schiebedachöffnung erforderlichen Länge in einem Längenpuffer gepuffert ist.

Ausgehend von diesem Stand der Technik liegt der Erfindung die Aufgabe zu Grunde, ein Verfahren zum Anbringen von Dichtungsprofilen der Eingangs erwähnten Art zu schaffen, bei dem die vorstehend beschriebenen Nachteile durch die Konfektionierung des Dichtungsprofils vermieden, zumindest jedoch gemindert werden.

Die Lösung dieser Aufgabe beruht auf dem Gedanken, die Konfektionierung des Dichtungsprofils zeitlich und räumlich an das Anbringen des Dichtungsprofils an der Fahrzeugkarosserie oder deren Teilen anzubinden.

Im Einzelnen wird diese Aufgabe bei einem Verfahren der eingangs erwähnten Art dadurch gelöst, dass
- das Dichtungsprofil nach dem Abzug aus dem Speicher einen ersten Puffer durchläuft, der Schwankungen zwischen der Zufluss- und Abflussgeschwindigkeit des Dichtungsprofils ausgleicht,
- anschließend an dem Dichtungsprofil kontinuierlich ein die Klebeschicht aufweisender Klebestreifen angebracht wird,
- das mit dem Klebestreifen versehene Dichtungsprofil einen zweiten Puffer durchläuft, der Schwankungen zwischen der Zufluss- und Abflussgeschwindigkeit des Dichtungsprofils ausgleicht und
- schließlich das mit dem Klebestreifen versehene Dichtungsprofil mit der Klebeschicht an der Fahrzeugkarosserie oder dem Teil der Fahrzeugkarosserie aufgerollt wird.

Durch das erfindungsgemäße Verfahren werden äußere Einflüsse, wie beispielsweise klimatische Bedingungen, Vibrationen und Eigenspannungen auf das Dichtungsprofil weitgehend ausgeschlossen, da die Konfektionierung des Dichtungsprofils in den Anbringungsprozess der Dichtung integriert ist.

Eine vorteilhafte Vorrichtung zur Durchführung des erfindungsgemäßen Verfahrens ergibt sich aus den Merkmalen des unabhängigen Anspruchs 5.

Für das erfindungsgemäße Verfahren wird vorzugsweise ein beidseitig mit einer Klebeschicht versehender Klebestreifen an dem Dichtungsprofil angeklebt. Die erste Klebeschicht verbindet den Klebestreifen mit dem Dichtungsprofil. Die zweite Klebeschicht verbindet das mit dem Klebestreifen versehene Dichtungsprofil mit der Fahrzeugkarosserie oder dem Teil der Fahrzeugkarosserie.

Die erste Klebeschicht des Klebestreifens weist vorzugsweise einen wärmeaktivierbaren Klebstoff auf, während die zweite, auf der gegenüberliegenden Seite des Klebestreifens angeordnete Klebeschicht vorzugsweise einen druckaktivierbaren Klebstoff aufweist. Der wärmaktivierbare Klebstoff hat den Vorteil, dass der Klebestreifen in der Konfektioniereinheit der Vorrichtung zur Durchführung des Verfahrens bis zur Andruckrolle für den Klebestreifen geführt und erst dort durch gezielte Zufuhr von Wärme aktiviert werden kann. Zur Zufuhr von Wärme sind vorzugsweise zumindest in Bewegungsrichtung des Dichtungsprofils vor der Andruckrolle Heizmittel angeordnet, die das Dichtungsprofil erwärmen und hierdurch den dem Klebestreifen anhaftenden wärmeaktivierbaren Klebstoff aktivieren. Zusätzlich beziehungsweise alternativ können in Umfangsrichtung der Andruckrolle Heizmittel angeordnet sein. Die Heizmittel sind vorzugsweise im Bereich desjenigen Segmentes der Andruckrolle angeordnet, das von dem Klebestreifen umschlungen wird.

In dem der Klebestreifen einen Schwankungen zwischen der Zufluss- und Abflussgeschwindigkeit des Klebestreifens ausgleichenden Puffer durchläuft, bevor der Klebestreifen auf dem Dichtungsprofil aufgerollt wird, kann der Klebestreifen kontinuierlich von unterschiedlichen Spulen abgezogen werden, wobei die Klebestreifen von den unterschiedlichen Spulen in einem Klebestreifen-Verbinder (auch als Splice-Einheit bezeichnet) miteinander verbunden werden.

Auf die Anbringung eines Liners auf dem Klebestreifen kann bei dem erfindungsgemäßen Verfahren vollständig verzichtet werden, wenn das mit dem Klebestreifen versehene Dichtungsprofil mittels Führungselementen bis zu der Andruckrolle in der Applikationseinheit geführt wird, ohne dass die mit der Karosserie oder dem Karosserieteil zusammenwirkende Klebeschicht des Klebestreifens mit den Führungselementen in Berührung gelangt.

Aufgrund der Wechselzeiten für die Fahrzeugkarosserie oder deren Teile, an denen die Dichtungen angebracht werden, ist das Verfahren zum Anbringen von Dichtungsprofilen nicht kontinuierlich. Um jedoch eine gleich bleibende Verbindungsqualität zwischen dem Klebestreifen und dem Dichtungsprofil in der Konfektioniereinheit zu erzielen ist es erforderlich, dass der Klebestreifen kontinuierlich an dem Dichtungsprofil angeklebt wird. Das kontinuierliche Anbringen des Klebestreifens an dem Dichtungsprofil wird bei dem erfindungsgemäßen Verfahren dadurch gewährleistet, dass das Dichtungsprofil vor und nach dem Konfektionieren der Dichtung jeweils einen Puffer durchläuft, der Schwankungen zwischen der Zufluss- und Abflussgeschwindigkeit des Dichtungsprofils ausgleicht. Hierdurch wird die Konfektionierung des Dichtungsprofils von der Applikation des konfektionierten Dichtungsprofils an der Fahrzeugkarosserie oder dem Teil der Fahrzeugkarosserie im Rahmen der üblichen Produktwechselzeiten entkoppelt. Nur dann, wenn die Applikation des konfektionierten Dichtungsprofils an den fortlaufend der Applikationseinheit.zugeführten Fahrzeugkarosserien oder Karosserieteilen längerfristig unterbrochen wird, muss auch die Konfektionierung des Dichtungsprofils angehalten werden.

Die zur Entkopplung eingesetzten Puffer werden beispielsweise von mehreren im Abstand zueinander veränderlichen Umlenkrollen gebildet, über die das Dichtungsprofil und/oder der Klebestreifen geführt werden. Der Abstand wird vorzugsweise mittels eines Verstellantriebs verändert.

Die Konfektioniereinheit der erfindungsgemäßen Vorrichtung zur Durchführung des Verfahrens weist einen Speicher für den Klebestreifen auf. Als Speicher kommen insbesondere Vorratsspulen in Betracht, auf denen der Klebestreifen aufgetrommelt ist. Im Interesse der bereits erwähnten kontinuierlichen Konfektionierung des Dichtungsprofils weist der Speicher der Konfektioniereinheit vorzugsweise mindestens zwei Spulen mit übereinstimmenden Klebestreifen auf, von denen wechselweise der Klebestreifen abgezogen wird. Ist der Klebestreifen der ersten Spule verbraucht, wird dessen Ende in einem Klebestreifen-Verbinder (auch als automatischer Splicer bezeichnet) mit dem Anfang des Klebestreifens auf der zweiten Spule verbunden. Zwischen dem Klebestreifen-Verbinder und der Andruckrolle der Konfektioniereinheit ist ein Puffer angeordnet, der die geringere Geschwindigkeit zwischen dem Zufluss des Klebestreifens und der unveränderten Abflussgeschwindigkeit des Klebestreifens beim Verbinden des Klebestreifens ausgleicht.

Wenn die Andruckrolle der Konfektioniereinheit in Richtung des Dichtungsprofils anstellbar ist, lassen sich mit der Konfektioniereinheit unterschiedliche Dichtungsprofile verarbeiten. Die Anstellung gewährleistet einen gleichmäßigen Andruck des Klebestreifens gegen das Dichtungsprofil weitgehend unabhängig von dessen Profilquerschnitt.

Zumindest die Applikationseinheit, gegebenenfalls jedoch auch die anderen Bestandteile der Vorrichtung, können an einem Roboterarm angeordnet sein. Alternativ besteht die Möglichkeit, dass die Vorrichtung zur Durchführung des Verfahrens stationär ausgebildet ist und die Karosserie beziehungsweise das Karosserieteil mittels eines Roboterarms an der Andruckrolle der Applikationseinheit entlang der für die Anbringung vorgesehenen Linie bewegt wird.

In vorteilhafter Ausgestaltung der Erfindung weist die Applikationseinheit eine Schneidvorrichtung für das Dichtungsprofil auf, mit der das Profil nach Beendigung des Vorgangs der Anbringung auf Stoß abgeschnitten werden kann.

Um gleich bleibende Bedingungen für die Konfektionierung des Dichtungsprofils zu erzeugten, sind vorzugsweise der erste Puffer, die Konfektioniereinheit und der zweite Puffer der Vorrichtung in einer Klimakammer angeordnet. Die Klimakammer erlaubt insbesondere die Konstanthaltung von Temperatur, Luftfeuchtigkeit und Luftdruck.

Nachfolgend wird die vorliegende Erfindung unter Bezugnahme auf die Zeichnungen näher beschrieben. Dabei zeigen:
- **Figur 1**: eine schematische Ansicht einer Vorrichtung zur Durchführung des erfindungsgemäßen Verfahrens,
- **Figur 2**: eine schematische Ansicht einer Konfektionierein- heit der Vorrichtung nach Figur 1,
- **Figur 3**: eine Darstellung eines Dichtungsprofils mit daran angeordnetem Klebestreifen sowie
- **Figur 4**: verschiedene Führungselemente für das Dichtungs- profil sowie eine Schneidvorrichtung für das Dichtungsprofil.

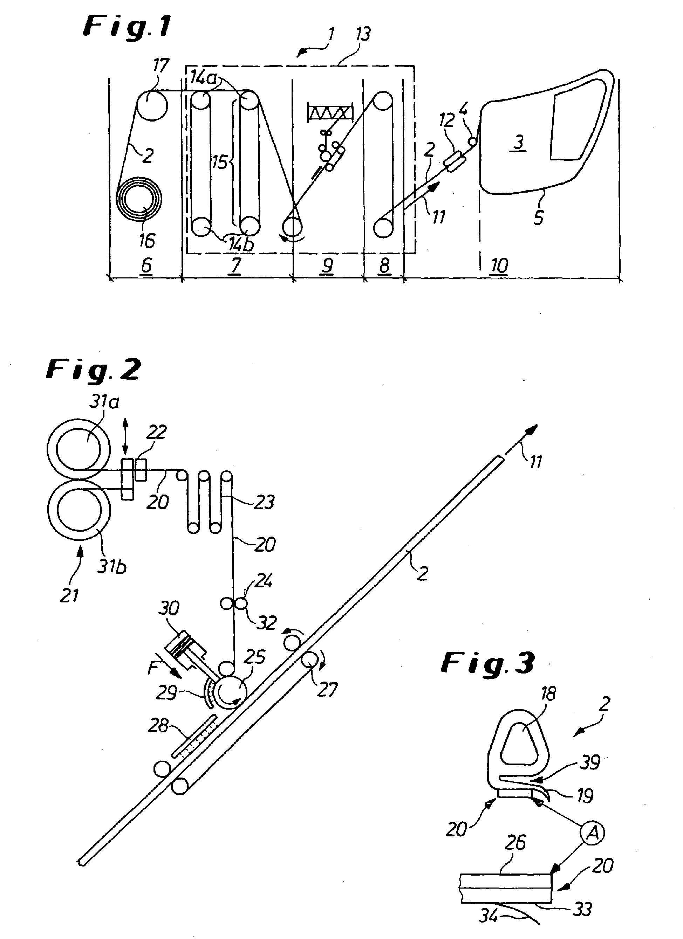

Figur 1 zeigt eine insgesamt mit (1) bezeichnete Vorrichtung zum Anbringen eines Dichtungsprofils (2) an einer Fahrzeugtür (3) mittels einer Andruckrolle (4). Im dargestellten Ausführungsbeispiel erfolgt die Anbringung des Dichtungsprofils (2) an einer Fläche (5), die aus der Ebene der Fahrzeugtür (3) und somit aus der Zeichnungsebene in einem annähernd rechten Winkel nach oben zeigt. Die für die Anbringung des Dichtungsprofils (2) vorgesehene Linie an dieser Fläche entspricht der Kontur (5) der schematisch dargestellten Fahrzeugtür.

Im Einzelnen weist die Vorrichtung eine Profilzuführung (6), einen ersten und zweiten Puffer (7, 8), eine zwischen dem ersten und zweiten Puffer (7, 8) angeordnete Konfektioniereinheit (9) sowie die Applikationseinheit (10) auf. Die Applikationseinheit (10) umfasst die Andruckrolle (4) sowie dieser in Bewegungsrichtung vorgeschaltete Führungsmittel (12) für das Dichtungsprofil. Diese Führungsmittel (12) können bei Bedarf ebenfalls angetrieben werden und das Führungsprofil (2) in Richtung der Andruckrolle (4) vorschieben. Im dargestellten Ausführungsbeispiel ist die Applikationseinheit (10) stationär ausgebildet. Die Fahrzeugtür (3) wird an der stationären Andruckrolle (4) mittels eines nicht dargestellten Roboterarms entlang der für die Anbringung des Dichtungsprofils vorgesehenen Linie bewegt.

Die beiden Puffer (7, 8) und die Konfektioniereinheit (9) sind in einer gemeinsamen Klimakammer (13) untergebracht. Die Puffer (7, 8) weisen jeweils mehrere im Abstand zueinander veränderliche Umlenkrollen (14 a, 14 b) auf. Der Abstand (15) wird mittels eines nicht dargestellten Verstellantriebs verändert, während das Dichtungsprofil (2) um die Umlenkrollen (14 a, 14 b) läuft. Die Profilzuführung (6) besteht aus einer Vorratsspule (16) als Speicher für das Dichtungsprofil, das auf der Vorratsspule (16) als reines Extrusionsprofil ohne Klebestreifen aufgewickelt ist. In Bewegungsrichtung des Dichtungsprofils (2) hinter der Vorratsspule (16) befindet sich eine angetriebene Umlenkrolle (17) zum Abziehen des Dichtungsprofils (2) von der Vorratsspule (16).

Das auf der Vorratsspule aufgewickelte Dichtungsprofil (2) ist im Querschnitt in Figur 3 dargestellt. Das Dichtungsprofil (2) besteht aus einem Hohlprofil (18) mit einer daran angeordneten Lippe (19) an der in der Konfektioniereinheit (9) der Klebestreifen (20) kurz vor dem Aufbringen des Dichtungsprofils (2) an der Fahrzeugtür (3) angebracht wird.

Die Verbindung von Dichtungsprofil (2) und Klebestreifen (20) erfolgt in der in Figur 2 im Einzelnen dargestellten Konfektioniereinheit (9). Die Konfektioniereinheit (9) besteht im Wesentlichen aus einem Speicher (21) für den Klebestreifen (20), einem Klebestreifen-Verbinder (22), einem Puffer (23), einem Abzug (24) für den Klebestreifen aus dem Speicher (21) sowie einer Andruckrolle (25), die den Klebestreifen (20) in Bewegungsrichtung (11) des Dichtungsprofils (2) umlenkt und den Klebestreifen (20) mit einer ersten Klebeschicht (26) mit einem wärmeaktivierbaren Klebstoff gegen das Dichtungsprofil (2) drückt. Unterhalb der Andruckrolle (25) auf der Unterseite des Dichtungsprofils (2) befindet sich ein Unterstützungsband (27), dessen Obertrum das Dichtungsprofil (2) gegen die Andruckkraft der Andrucksrolle (25) abstützt. Zusammen mit zwei weitern Antriebsrollen, die auf Höhe der Umlenkrollen des Unterstützungsbands (27) auf der Oberseite des Führungsprofils (2) angeordnet sind, wird dieses in Bewegungsrichtung (11) angetrieben.

In Bewegungsrichtung (11) vor der Andruckrolle (25) ist eine Heizung (28) angeordnet, die das unter ihr herlaufende Profil (2) im Durchlauf erwärmt. Eine weitere Heizung (29) ist in Umfangsrichtung der Andruckrolle (25) angeordnet und erwärmt die wärmeaktivierbare erste Klebeschicht (26). Die Kraft, mit der der Klebestreifen (20) von der Andruckrolle (25) gegen das Dichtungsprofil (2) gedrückt wird, wird von einer senkrecht zur Bewegungsrichtung (11) wirksamen, geregelten Zustellung (30) bewirkt.

Der insgesamt mit (21) bezeichnete Speicher der Konfektioniereinheit (9) weist zwei Vorratsspulen (31 a, 31 b) mit übereinstimmenden Klebestreifen (20) auf. Von den beiden Vorratsspulen (31 a, 31 b) wird der Klebestreifen (20) wechselweise abgezogen. Ist der Klebestreifen (20) von der Vorratsspule (31 a) verbraucht, wird dessen hinteres Ende in dem Klebestreifen-Verbinder (22) automatisch mit dem Anfang des Klebestreifens (20) auf der Vorratsspule (31 b) verbunden. Die Vorratsspule (31 a) wird durch eine unverbrauchte neue Vorratsspule ersetzt. Der kurzzeitige Stillstand des Klebestreifenabzugs während des Verbindens der Klebestreifen von den Vorratsrollen (31 a, 31 b) in dem automatischen Klebestreifen-Verbinder (22) wird in den Puffer (23) durch Verkürzung der Abstände zwischen den Umlenkrollen derart ausgeglichen, dass die Abzugsgeschwindigkeit in Abzugsrichtung hinter dem Puffer (23) konstant bleibt. Für eine gleichmäßige Abzugsgeschwindigkeit sorgt der Abzug (24) mit Hilfe der auf beiden Seiten des Klebestreifens (20) angreifenden gegenläufig rotierenden Abzugsrollen (32).

Der ersten, wärmeaktivierbaren Klebeschicht (26) des Klebestreifens (20) liegt auf der gegenüberliegenden Seite des Klebestreifens (20) eine zweite Klebeschicht (33) gegenüber, die insbesondere von einem druckaktivierbaren Klebstoff gebildet wird.

Diese zweite Klebeschicht (33) wird üblicherweise mit einem Liner (34), wie er in Figur 3 unten dargestellt ist, abgedeckt. Kurz bevor das Dichtungsprofil (2) mit der zweiten Klebeschicht (33) entlang der Linie an der Fahrzeugtür aufgerollt wird, wird dieser Liner (34), beispielsweise über eine Umlenkrolle von dem Klebestreifen weggeführt und auf einer Spule aufgewickelt.

Mit der erfindungsgemäßen Anordnung ist es jedoch auch möglich, vollständig auf einen Liner (34) zu verzichten, wenn das mit dem Klebestreifen (20) versehene Dichtungsprofil (2) derart mittels Antriebs- und Führungselementen, insbesondere Antriebsrollen und Umlenkungen bis zu der Andruckrolle (4) in der Applikationseinheit (10) geführt wird, dass die zweite Klebeschicht (33) mit dem druckaktivierbaren Klebstoff mit den Antriebs- und Führungselementen nicht in Berührung gelangt. Insbesondere nach der Verbindung des Klebestreifens (20) mit dem Dichtungsprofil (2), darf das Dichtungsprofil nur noch so transportiert werden, dass keine Berührung der zweiten Klebeschicht (33) mit Antriebs - und Führungselementen auftritt.

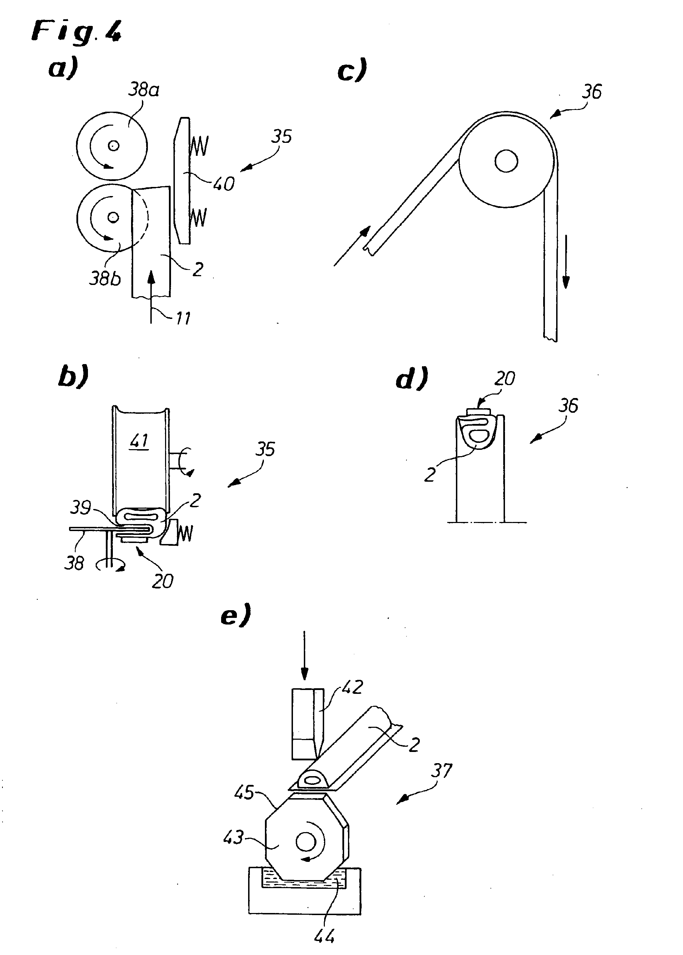

Figur 4 zeigt verschiedene Antriebs- und Führungsmittel, die dieser Forderung genügen. Figuren 4 a), b) zeigen einen reibungsfreien Profilvorschub (35), der anstelle des Unterstützungsbandes (27) und den korrespondierenden Rollen zum Einsatz gelangen kann, in Unteransicht und in einer geschnittenen Darstellung. Figur 4 c) zeigt eine Seitenansicht einer Umlenkrolle in Bewegungsrichtung des Dichtungsprofils (2) hinter der Konfektioniereinheit (9). Figur 4 d) zeigt die Umlenkrolle nach Figur 4 c) teilweise im Schnitt. Figur 4 e) zeigt schließlich eine im Bereich der Andruckrolle (4) angeordnete Schneidvorrichtung (37), mit der das an der Fahrzeugtür (3) angebrachte Dichtungsprofil am Ende des Applikationsprozesses auf Stoß abgeschnitten wird.

Der reibungsfreie Profilvorschub (35) für ein Türdichtungsprofil gemäß Figur 3 besteht im Wesentlichen aus zwei gleichsinnig rotierenden Scheiben, die in den Zwischenraum zwischen dem Hohlprofil (18) und der Lippe (19) des Dichtungsprofils (2) eingreifen, wie dies insbesondere aus der Querschnittdarstellung in Figur 4 b) ersichtlich ist. Da sicht der Klebestreifen (20) an der nach Außen weisenden Fläche der Lippe (19) befindet, kommt die zweite Klebeschicht (33) mit den umlaufenden Scheiben (38) nicht in Berührung. Um ein seitliches Herausrutschen der umlaufenden Scheiben (38 a, b) aus dem Zwischenraum (39) zu verhindern, wird das Dichtungsprofil (2) seitlich von einem Führungselement (40) geführt, das mittels auf das Führungselement (40) wirkender Federn die Dichtung in Richtung der umlaufenden Scheiben drückt. Auf der Oberseite des Hohlprofils (18) läuft eine Antriebsrolle (41) ab, die das Dichtungsprofil (2) in Bewegungsrichtung (11) bewegt.

Die in Figuren 4 c), d) dargestellte Umlenkrolle (36) führt das Dichtungsprofil (2) derart, dass der Klebestreifen (20) nach Außen weist, während das Dichtungsprofil (2) mit seiner Hohlkammer (18) in der in der Umlenkrolle umlaufenden Nut (42) zu liegen kommt.

Die in Figur 4 e) schematisch dargestellte Schneidvorrichtung (37) besteht aus einem Schneidmesser (42), einem um eine Rotationsachse drehbaren Gegenmesser (43) und einem Tauchbad (44) mit einem Antihaftmittel. Die Berührung des Gegenmessers (43) mit der zweiten Klebschicht (33) beim Abschneiden des Dichtungsprofils (2) mit dem daran anhaftenden Klebestreifen (20) ist unproblematisch, da nach jedem Schneidvorgang das Gegenmesser (43) weitergedreht wird, so dass nacheinander die verschiedenen wirksamen Schneidkanten (45) des Gegenmessers in das Antihaftmittel in dem Tauchbad (44) eintauchen, so dass eine Verschmutzung des Schneid- und Gegenmessers durch Klebstoffrückstände vermieden wird. Als nichtklebende Materialien kommen Teflon oder eine Plasmabeschichtung in Betracht.

### Bezugszeichenliste:

| **Nr.** | **Bezeichnung** | **Nr.** | **Bezeichnung** |
|---|---|---|---|
| 1. | Vorrichtung | 25. | Andruckrolle |
| 2. | Dichtungsprofil | 26. | erste Klebeschicht |
| 3. | Fahrzeugtür | 27. | Unterstützungsband |
| 4. | Andruckrolle | 28. | Heizung |
| 5. | Kontur | 29. | Heizung |
| 6. | Profilzuführung | 30. | Zustellung |
| 7. | erster Puffer | 31 a | Vorratsspule |
| 8. | zweiter Puffer | 31 b | Vorratsspule |
| 9. | Konfektioniereinheit | 32. | Abzugsrollen |
| 10. | Applikationseinheit | 33. | zweite Klebeschicht |
| 11. | Bewegungsrichtung | 34. | Liner |
| 12. | Führungsmittel | 35. | Profilvorschub |
| 13. | Klimakammer | 36. | Umlenkrolle |
| 14 a | Umlenkrollen | 37. | Schneidvorrichtung |
| 14 b | Umlenkrollen | 38 a | umlaufende Scheibe |
| 15. | Abstand | 38 b | umlaufende Scheibe |
| 16. | Vorratsspule | 39. | Zwischenraum |
| 17. | Umlenkrolle | 40. | Führungselement |
| 18. | Hohlprofil | 41. | Antriebsrolle |
| 19. | Lippe | 42. | Schneidemesser |
| 20. | Klebestreifen | 43. | Gegenmesser |
| 21. | Speicher | 44. | Tauchbad |
| 22. | Klebestreifen-Verbinder | 45. | Schneidekanten |
| 23. | Puffer | 48. | |
| 24. | Abzug | 49. | |

## Patentansprüche

1. Verfahren zum Anbringen von Dichtungsprofilen an Fahrzeugkarosserien oder deren Teilen, wobei das Dichtungsprofil aus einem Speicher abgezogen und mit einer an dem Dichtungsprofil angeordneten Klebeschicht entlang einer für die Anbringung vorgesehenen Linie an der Fahrzeugkarosserie oder dem Teil der Fahrzeugkarosserie mittels einer Andruckrolle aufgerollt wird,
und das Dichtungsprofil (2) nach dem Abzug aus dem Speicher (16) einen ersten Puffer (7) durchläuft, der Schwankungen zwischen der Zufluss- und Abflussgeschwindigkeit des Dichtungsprofils ausgleicht, **dadurch gekennzeichnet, dass**
- anschließend an dem Dichtungsprofil (2) kontinuierlich ein die Klebeschicht (33) aufweisender Klebestreifen (20) angebracht wird,
- das mit dem Klebestreifen (20) versehene Dichtungsprofil (2) einen zweiten Puffer (8) durchläuft, der Schwankungen zwischen der Zufluss- und Abflussgeschwindigkeit des Dichtungsprofils ausgleicht und
- schließlich das mit dem Klebestreifen (20) versehene Dichtungsprofil (2) mit der Klebeschicht (33) an der Fahrzeugkarosserie oder dem Teil (3) der Fahrzeugkarosserie aufgerollt wird.

2. Verfahren nach Anspruch 1, **dadurch gekennzeichnet, dass** ein beidseitig mit einer Klebeschicht (26, 33) versehener Klebestreifen (20) an dem Dichtungsprofil (2) angeklebt wird, in dem der Klebstreifen (20) aus einem Speicher (31a,b) abgezogen und mittels einer Andruckrolle (25) auf dem Dichtungsprofil (2) aufgerollt wird.

3. Verfahren nach Anspruch 2, **dadurch gekennzeichnet, dass** der Klebestreifen (20) einen Schwankungen zwischen der Zufluss- und Abflussgeschwindigkeit des Klebestreifens ausgleichenden Puffer (23) durchläuft, bevor der Klebestreifen (20) auf eine Fläche (19) des Dichtungsprofils (2) aufgerollt wird.

4. Verfahren nach einem der Ansprüche 1 bis 3, **dadurch gekennzeichnet, dass** das mit dem Klebestreifen (20) versehene Dichtungsprofil (2) mittels Antriebs- und/oder Führungselementen (35, 36) bis zu der Andruckrolle (4) geführt wird ohne dass die mit der Karosserie oder dem Karosserieteil zusammenwirkende Klebeschicht (33) des Klebestreifens (20) mit den Antriebs- und/oder Führungselementen (35,36) in Berührung gelangt.

5. Vorrichtung zur Durchführung des Verfahrens nach einem der Ansprüche 1 bis 4, **gekennzeichnet durch**
- einen Speicher (16) für das Dichtungsprofil (2),
- Mittel (17,27) zum Abziehen des Dichtungsprofils (2) aus dem Speicher (16),
- einen dem Speicher (16) in Bewegungsrichtung (11) des Dichtungsprofils (2) nachgeordneten ersten Puffer (7), der Schwankungen zwischen der Zufluss- und Abflussgeschwindigkeit des Dichtungsprofils ausgleicht,
- eine in Bewegungsrichtung (11) des Dichtungsprofils (2) hinter dem ersten Puffer (7) angeordnete Konfektioniereinheit (9) zum Anbringen eines Klebestreifens (20) an dem Dichtungsprofil (2),
- einen in Bewegungsrichtung (11) des Dichtungsprofils (2) hinter der Konfektioniereinheit (9) angeordneten zweiten Puffer (8), der Schwankungen zwischen der Zufluss- und Abflussgeschwindigkeit des Dichtungsprofils ausgleicht
- sowie eine Applikationseinheit (10) zum Anbringen des Dichtungsprofils (2) an der Fahrzeugkarosserie oder einem Teil (3) der Fahrzeugkarosserie.

6. Vorrichtung nach Anspruch 5, **dadurch gekennzeichnet, dass** die Konfektioniereinheit (9)
- einen Speicher (21) für den Klebestreifen (20),
- Mittel zum Abziehen (24,32) des Klebestreifens (20) aus dem Speicher (21),
- sowie eine Andruckrolle (25) aufweist, die den Klebstreifen (20) in Bewegungsrichtung des Dichtungsprofils (2) umlenkt und den Klebstreifen (20) mit einer ersten Klebeschicht (26) gegen das Dichtungsprofil drückt.

7. Vorrichtung nach Anspruch 6, **dadurch gekennzeichnet,**
- **dass** der Speicher (21) der Konfektioniereinheit (9) mindestens zwei Spulen (31a,31b) mit übereinstimmenden Klebstreifen (20) aufweist, von denen wechselweise der Klebestreifen abgezogen wird,
- **dass** die Klebestreifen (20) von den unterschiedlichen Spulen (31a,31b) in einem Klebestreifen-Verbinder (22) miteinander verbunden werden und zwischen dem Klebestreifen-Verbinder (22) und der Andruckrolle (25) ein Puffer (23) angeordnet ist, der Schwankungen zwischen der Zufluss- und Abflussgeschwindigkeit des Klebestreifens (20) ausgleicht.

8. Vorrichtung nach Anspruch 7, **dadurch gekennzeichnet,**
- **dass** die erste Klebeschicht (26) des Klebestreifen (20) einen wärmeaktivierbaren Klebstoff aufweist und eine zweite, auf der gegenüberliegenden Seite des Klebestreifens angeordnete Klebeschicht (33) einen druckaktivierbaren Klebstoff aufweist und
- **dass** zumindest in Bewegungsrichtung (11) des Dichtungsprofils (2) vor der Andruckrolle (25) Heizmittel (28) angeordnet sind.

9. Vorrichtung nach Anspruch 8, **dadurch gekennzeichnet, dass** in Umfangsrichtung der Andruckrolle (25) Heizmittel (29) angeordnet sind.

10. Vorrichtung nach einem der Ansprüche 5 bis 9, **dadurch gekennzeichnet, dass** die Andruckrolle (25) der Konfektioniereinheit (9) in Richtung des Dichtungsprofils (2) anstellbar ist.

11. Vorrichtung nach einem der Ansprüche 5 bis 10, **dadurch gekennzeichnet, dass** die Puffer (7,8,23) mehrere im Abstand mittels eines Verstellantriebs zueinander veränderliche Umlenkrollen aufweisen, über die das Dichtungsprofil (2) und / oder der Klebestreifen(20) geführt wird.

12. Vorrichtung nach einem der Ansprüche 5 bis 11, **dadurch gekennzeichnet, dass** zumindest die Applikationseinheit (10) der Vorrichtung an einem Roboterarm angeordnet ist.

13. Vorrichtung nach einem der Ansprüche 5 bis 12, **dadurch gekennzeichnet, dass** die Applikationseinheit (10) eine Schneidvorrichtung (37) für das Dichtungsprofil (2) aufweist.

14. Vorrichtung nach einem der Ansprüche 5 bis 13, **dadurch gekennzeichnet, dass** zumindest der erste Puffer (7), die Konfektioniereinheit (9) und der zweite Puffer (8) der Vorrichtung (1) in einer Klimakammer (13) angeordnet sind.

## Claims

1. A method for attaching sealing profiles to vehicle bodies or parts thereof, wherein the sealing profile is pulled from a storage unit and with an adhesive layer disposed on the sealing profile, is rolled along a line provided for the attachment on the vehicle body or said part of the vehicle body by means of a press roller
and after pulling from the storage unit (16), the sealing profile (2) runs through a first buffer (7) which compensates for fluctuations between the incoming and outgoing speed of the sealing profile, **characterised in that**
- an adhesive strip (20) having the adhesive layer (33) is then attached continuously to the sealing profile (2),
- the sealing profile (2) provided with the adhesive strip (20) then runs through a second buffer (8), which compensates for fluctuations between the incoming and outgoing speed of the sealing profile and
- finally the sealing profile (2) provided with the adhesive strip (20) is rolled with the adhesive layer (33) on the vehicle body or said part (3) of the vehicle body.

2. The method according to claim 1, **characterised in that** an adhesive strip (20) provided with an adhesive layer (26, 33) on both sides is adhered to the sealing profile (2), whereby the adhesive strip (20) is pulled from a storage unit (31a, b) and rolled on the sealing profile (2) by means of a press roller (25).

3. The method according to claim 2, **characterised in that** the adhesive strip (20) runs through a buffer (23) which compensates for fluctuations between the incoming and outgoing speed of the adhesive strip before the adhesive strip (20) is rolled onto a surface (19) of the sealing profile (2).

4. The method according to any one of claims 1 to 3, **characterised in that** the sealing profile (2) provided with the adhesive strip (20) is guided by means of drive and/or guide elements (35, 36) as far as the press roller (4) without the adhesive layer (33) of the adhesive strip (20) interacting with the body or the body part coming in contact with the drive and/or guide elements (35, 36).

5. Apparatus for carrying out the method according to any one of claims 1 to 4, **characterised by**
- a storage unit (16) for the sealing profile (2),
- means (17, 27) for pulling the sealing profile (2) from the storage unit (16),
- a first buffer (7) located downstream of the storage unit (16) in the direction of movement (11) of the sealing profile (2), which compensates for fluctuations between the incoming and outgoing speed of the sealing profile,
- an assembly unit (9) located downstream of the first buffer (7) in the direction of movement (11) of the sealing profile (2) for attaching an adhesive strip (20) to the sealing profile (2),
- a second buffer (8) located downstream of the assembly unit (9) in the direction of movement (11) of the sealing profile (2), which compensates for fluctuations between the incoming and outgoing speed of the sealing profile,
- and an application unit (13) for attachment of the sealing profile (2) to the vehicle body or a part (3) of the vehicle body.

6. The apparatus according to claim 5, **characterised in that** the assembly unit (9) comprises
- a storage unit (21) for the adhesive strip (20),
- means for pulling (24, 32) the adhesive strip (20) from the storage unit (21),
- and a press roller (25) which deflects the adhesive strip (20) in the direction of movement of the sealing profile (2) and presses the adhesive strip (20) with a first adhesive layer (26) against the sealing profile.

7. The apparatus according to claim 6, **characterised in**
- **that** the storage unit (21) of the assembly unit (9) comprises at least two spools (31a, 31b) with matching adhesive strips (20), from which the adhesive strip is pulled alternately,
- **that** the adhesive strips (20) from the different spools (31a, 31b) are interconnected in an adhesive strip connector (22) and a buffer (23) is disposed between the adhesive strip connector (22) and the press roller (25), which compensates for fluctuations between the incoming and outgoing speed of the adhesive strip (20).

8. The apparatus according to claim 7, **characterised in**
- **that** the first adhesive layer (26) of the adhesive strip (20) comprises a heat-activated adhesive and a second adhesive layer (33) disposed on the opposite side of the adhesive strip comprises a pressure-activated adhesive and
- **that** heating means (28) are disposed upstream of the press roller(25) at least in the direction of movement (11) of the sealing profile (2).

9. The apparatus according to claim 8, **characterised in that** heating means (29) are disposed in the circumferential direction of the press roller (25).

10. The apparatus according to any one of claims 5 to 9, **characterised in that** the press roller (25) of the assembly unit (9) is adjustable in the direction of the sealing profile (2).

11. The apparatus according to any one of claims 5 to 10, **characterised in that** the buffers (7, 8, 23) comprise a plurality of deflecting rollers which can be varied in distance from one another by means of an adjusting drive, over which the sealing profile (2) and/or the adhesive strip (20) is guided.

12. The apparatus according to any one of claims 5 to 11, **characterised in that** at least the application unit (10) of the apparatus is disposed on a robot arm.

13. The apparatus according to any one of claims 5 to 12, **characterised in that** the application unit (10) comprises a cutting device (37) for the sealing profile (2).

14. The apparatus according to any one of claims 5 to 13, **characterised in that** at least the first buffer (7), the assembly unit (9) and the second buffer (8) of the apparatus (1) are disposed in a climate-controlled chamber (13).

## Revendications

1. Procédé pour mettre en place des joints d'étanchéité profilés sur des carrosseries de véhicules ou leurs parties, le joint d'étanchéité profilé étant retiré d'une réserve et étant enroulé avec une couche adhésive disposée sur le joint d'étanchéité profilé le long d'une ligne prévue pour la mise en place sur la carrosserie de véhicule ou la partie de la carrosserie de véhicule au moyen d'un galet de pression,
et le joint d'étanchéité profilé (2) parcourt, après l'extraction de la réserve (16), un premier élément tampon (7), lequel compense des variations entre la vitesse d'arrivée et la vitesse de sortie du joint d'étanchéité profilé, **caractérisé en ce que**
- une bande adhésive (20) présentant la couche adhésive (33) est placée de façon continue la suite du joint d'étanchéité profilé (2),
- le joint d'étanchéité profilé (2) doté de la bande adhésive (20) parcourt un second élément tampon (8), qui compense des variations entre la vitesse d'arrivée et la vitesse de sortie du joint d'étanchéité profilé et
- enfin le joint d'étanchéité profilé (2) doté de la bande adhésive (20) est enroulé avec la couche adhésive (33) sur la carrosserie de véhicule ou la partie (3) de la carrosserie de véhicule.

2. Procédé selon la revendication 1, **caractérisé en ce qu'**une bande adhésive (20) dotée des deux côtés d'une couche adhésive (26, 33) est collée sur le joint d'étanchéité profilé (2), dans lequel la bande adhésive (20) est retirée d'une réserve (31a, b) et est enroulée au moyen d'un galet de pression (25) sur le joint d'étanchéité profilé (2).

3. Procédé selon la revendication 2, **caractérisé en ce que** la bande adhésive (20) parcourt un élément tampon (23) qui compense des variations entre la vitesse d'arrivée et la vitesse de sortie de la bande adhésive, avant que la bande adhésive (20) soit enroulée sur une surface (19) du joint d'étanchéité profilé (2).

4. Procédé selon l'une quelconque des revendications 1 à 3, **caractérisé en ce que** le joint d'étanchéité profilé (2) doté de la bande adhésive (20) est guidé au moyen d'éléments d'entraînement et/ou de guidage (35, 36) jusqu'au galet de pression (4) sans que la couche adhésive (33), coopérant avec la carrosserie ou la partie de carrosserie, de la bande adhésive (20) arrive en contact avec les éléments d'entraînement et/ou de guidage (35, 36).

5. Dispositif pour mettre en oeuvre le procédé selon l'une quelconque des revendications 1 à 4, **caractérisé par**
- une réserve (16) pour le joint d'étanchéité profilé (2),
- des moyens (17, 27) pour l'extraction du joint d'étanchéité profilé (2) de la réserve (16),
- un premier élément tampon (7) placé en aval de la réserve (16) dans le sens de déplacement (11) du joint d'étanchéité profilé (2), lequel compense des variations entre la vitesse d'arrivée et la vitesse de sortie du joint d'étanchéité profilé,
- une unité de confectionnement (9) disposée dans le sens de déplacement (11) du joint d'étanchéité profilé (2) en aval du premier élément tampon (7), destinée à placer une bande adhésive (20) sur le joint d'étanchéité profilé (2),
- un second élément tampon (8) disposé dans le sens de déplacement (11) du joint d'étanchéité profilé (2) en aval de l'unité de confectionnement (9), qui compense des variations entre la vitesse d'arrivée et la vitesse de sortie du joint d'étanchéité profilé,
- et une unité d'application (10) pour placer le joint d'étanchéité profilé (2) sur la carrosserie de véhicule ou une partie (3) de la carrosserie de véhicule.

6. Dispositif selon la revendication 5, **caractérisé en ce que** l'unité de confectionnement (9) présente
- une réserve (21) pour la bande adhésive (20),
- des moyens pour l'enlèvement (24, 32) de la bande adhésive (20) de la réserve (21),
- et un galet de pression (25), qui dévie la bande adhésive (20) dans le sens de déplacement du joint d'étanchéité profilé (2) et appuie la bande adhésive (20) avec une première couche adhésive (26) contre le joint d'étanchéité profilé.

7. Dispositif selon la revendication 6, **caractérisé**
- **en ce que** la réserve (21) de l'unité de confectionnement (9) présente au moins deux bobines (31a, 31b) avec des bandes adhésives (20) concordantes, desquelles la bande adhésive est retirée de façon alternative,
- **en ce que** les bandes adhésives (20) provenant des différentes bobines (31a, 31b) sont reliées les unes aux autres dans un assembleur de bande adhésive (22) et un élément tampon (23) est disposé entre l'assembleur de bande adhésive (22) et le galet de pression (25), lequel élément compense des variations entre la vitesse d'arrivée et la vitesse de sortie de la bande adhésive (20).

8. Dispositif selon la revendication 7, **caractérisé**
- **en ce que** la première couche adhésive (26) de la bande adhésive (20) présente une colle activable par chaleur et une seconde couche adhésive (33) disposée sur le côté opposé de la bande adhésive présente une colle activable par la pression et
- **en ce que** des moyens de chauffage (28) sont t disposés au moins dans le sens de déplacement (11) du joint d'étanchéité profilé (2) en amont du galet de pression (25).

9. Dispositif selon la revendication 8, **caractérisé en ce que** des moyens de chauffage (29) sont disposés dans le sens périphérique du galet de pression (25).

10. Dispositif selon l'une quelconque des revendications 5 à 9, **caractérisé en ce que** le galet de pression (25) de l'unité de confectionnement (9) peut être déplacé en direction du joint d'étanchéité profilé (2).

11. Dispositif selon l'une quelconque des revendications 5 à 10, **caractérisé en ce que** les éléments tampon (7, 8, 23) présentent plusieurs poulies de renvoi variables en distance les uns par rapport aux autres au moyen d'un entraînement de positionnement, par lesquels le joint d'étanchéité profilé (2) et/ou la bande adhésive (20) est guidé.

12. Dispositif selon l'une quelconque des revendications 5 à 11, **caractérisé en ce qu'**au moins l'unité d'application (10) du dispositif est disposée sur un bras de robot.

13. Dispositif selon l'une quelconque des revendications 5 à 12, **caractérisé en ce que** l'unité d'application (10) présente un dispositif de coupe (37) pour le joint d'étanchéité profilé (2).

14. Dispositif selon l'une quelconque des revendications 5 à 13, **caractérisé en ce qu'**au moins le premier élément tampon (7), l'unité de confectionnement (9) et le second élément tampon (8) du dispositif (1) sont disposés dans une chambre de climatisation (13).
